# EUROPEAN PATENT APPLICATION

(11) **EP 1 241 859 A1**
(43) Date of publication of application: **18.09.2002**
(21) Application number: 01610025.7
(22) Date of filing: 14.03.2001
(51) Int. Cl.: H04L 29/12, H04L 29/06

(54) **Method and system for obtaining domain name and IP-address resolution**

(71) Applicant: TELEFONAKTIEBOLAGET LM ERICSSON (publ), 126 25 Stockholm (SE)
(72) Inventor: Elg, Johannes, 217 63 Malmo (SE)
(74) Representative: Boesen, Johnny Peder

(57) **Abstract**

This invention relates to a method of obtaining domain name and IP-address resolution for a device connecting with a network in an ad-hoc fashion. The method comprises the step of receiving at least one data packet from at least one communication application via a TCP/IP stack (102,103,104) implemented in a stationary device. The method further comprises the steps of filtering (201,202,203) the received packets according to at least one predetermined condition, processing (204,205) the filtered out packets in order to generate and handle at least one request relating to domain name and/or IP-address resolution locally thereby deriving at least one result, and sending the at least one result of the at least one request back up the stack.
In this way local domain name and IP-address resolution are obtained for device connecting with a network in an ad-hoc fashion.
This invention also relates to a corresponding computer system and computer readable medium.

## Description

The present invention relates to a method of obtaining domain name and IP-address resolution for a device connecting with a network in an ad-hoc fashion, the method comprising the step of
- receiving at least one data packet, comprising a data part and a header part, from at least one communication application via a TCP/IP stack implemented in a stationary device.

Additionally, the invention also relates to a computer system for performing the method according to the invention and a computer readable-medium comprising a program, which may cause a computer to perform the method of the present invention.

More specifically, the invention relates to establishing and query/obtaining IP-addresses and corresponding domain names for a wireless device that connects with a network in an ad-hoc fashion or where there otherwise might be no infrastructure with standard Internet servers to carry out this task.

When a device establishes a connection with a standard TCP/IP (Transmission Control Protocol/Internet Protocol) network is has to be assigned a unique IP-address in order to be reachable/identifiable on the network.

For a stationary device the assigned IP-address may be static or dynamic (i.e. the device is assigned a new IP-address at every session, start-up or the like).

However, the DNS and DHCP protocols are designed for a relative static environment, where new nodes does not typically enter the network more than once a day, e.g. when users turn their computers on and is given an IP-address that typically is used for the rest of the day.

For mobile devices connecting to a network the assignment is normally dynamic for practical reasons.

In Bluetooth and other wireless ad-hoc networks, nodes typically come and go with much higher frequency, which DNS and DHCP is not specifically designed to handle very well.

Normally, IP-address and domain name resolution are obtained by connecting via TCP/IP to at least one remote server like DNS and DHCP servers. A request is sent to the server(s) and a TCP or UDP communication is sent back from the server(s). Due to the communication, which uses extra time and requires further complexity, back from the server(s) and the network path with standard delays DNS and DHCP servers are in general not very good at handling assignment of IP-address and domain name resolution for ad-hoc connecting devices, units, etc.

One way of establishing a standard for how to do IP-routing and address resolution in wireless ad-hoc networks has been proposed by the Mobile Ad-hoc Networking group (MANET) and is described at 'http://www.ietf.org/html.charters/manet-charter.html'.

However, this proposal involves complicated routing protocols that require a significant amount of overhead. It will also take some time before these protocols are widely accepted and used as standards. Additionally, the proposed standard also has a great impact on existing protocol stack implementations thereby providing a need for updates of existing hardware and/or software in order to function properly.

An object of the invention is to provide a method that provides a simplified and enhanced way of obtaining name and IP-address resolution in ad-hoc networks.

An additional object of the present invention is to provide domain name and IP-address resolution with a minimal impact on existing TCP/IP stacks.

A further object is to provide a method that allows for a simplified connecting device for which the domain name and IP-address resolution are to be obtained.

These objects among others are achieved by the method of the aforementioned kind that further comprises the steps of
- filtering the received packets according to at least one predetermined condition,
- processing the filtered out packets in order to generate and handle at least one request relating to domain name and/or IP-address resolution locally thereby deriving at least one result, and
- sending the at least one result of the at least one request back up the stack.

Hereby, a method is provided that obtains an IP-address and domain name for an ad-hoc connecting device when the device connects to a network or a stationary device connected with a network like an IP network by handling any relevant queries/request(s) locally.

This avoids the need for a transport layer retransmission of TCP, i.e. transport/communication on a physical network, which would otherwise be necessary if a name domain and a corresponding IP-address were to be obtained in a standard manner, i.e. connecting to external server(s).

Additionally, the method may also have a minimum impact on existing hardware/software since it may be performed transparently with respect to the implemented TCP/IP stack.

The connecting device may also have simplified complexity and/or functionality, since the TCP/IP stack and relevant functionality is located and used in the stationary device.

Preferably, the stationary device is a PC, computer, etc. and the connecting device is a wireless communication device communicating with at least one communication application in the stationary device.

According to a preferred embodiment, the step of filtering is done by examining a field of the header part of the received packets.

Hereby, a very simple and efficient filtering of the relevant data packets are obtained, since only one or a few fields of the headers need to be examined in order to determine whether a particular packet should be filtered out.

According to a preferred embodiment, the step of filtering is done by checking at least a field of the header part of the received packets for one or more of the following conditions:
- Packet type = User Data Protocol (UDP),
- Destination port number = the assigned port for Dynamic Host Configuration Protocol (DHCP),
- Destination port number = the assigned port for Dynamic Name System (DNS), or
- any other suitable condition.

In accordance with one embodiment of the invention, the steps of the method are executed by a driver implemented at the interface between a standard TCP/IP stack and an underlying Network Medium Access Controller (MAC) or Link Layer Driver.

Hereby, the method according to the present invention are executed/performed with a minimum impact on an existing TCP/IP stack implementation in the stationary device like a standard PC or any other suitable device with protocol and network means.

Alternatively, the driver may be implemented without an underlying MAC or Link Layer driver if another way to send the actual IP-frames to the actual remote node is provided. This may e.g. be provided by implementing another driver, handling the sending of the actual IP-frames, that is situated parallel to the abovementioned driver, i.e. the abovementioned driver and the (another) driver for the IP-address resolution both is situated side-by-side under the TCP/IP protocol.

In accordance with another embodiment of the present invention, the at least one result comprises a local IP address and/or a local domain name for use by the connecting device.

In yet another embodiment, the device is a mobile wireless communications device and the mobile device and the stationary device communicates according to a wireless protocol.

In this way, a mobile wireless communications device may obtain an IP-address and domain name resolution by connecting to the stationary device. This reduces the need of complicated protocol software and/or hardware in the mobile device, since the stationary device's protocol may be used.

Alternatively, either of the two devices may be mobile and/or stationary.

In another embodiment, the mobile wireless communications device uses a discovery method implemented by any one of a radio MAC, a Bluetooth Service Discovery Protocol (SDP), a base-band layer, a Bluetooth Link Manager and any other suitable protocol.

Hereby, an easy connection with the stationary device may be obtained by the mobile wireless communications device, so that the mobile device obtains IP-address and domain name resolution in a very simple manner.

The actual protocol to resolve or negotiate the IP-address between the devices may in fact be any suitable protocol since the driver is transparent to the actual protocol.

Further, the invention relates to a computer-readable medium having stored thereon instructions for causing a processing unit or a computer system to execute the method described above and in the following. A computer-readable medium may e.g. be a CD-ROM, a CD-R, a DVD RAM/ROM, a floppy disk, a hard disk, a smart card, a network accessible via a network connection, a ROM, RAM, and/or Flash memory, etc. or generally any other kind of media that provides a computer system with information regarding how instructions/commands should be executed.

Hereby, when a computer is caused to retrieve electronic information - as a consequence of the contents of a computer-readable medium as described above - the advantages mentioned in connection with the corresponding method according to the invention are achieved.

Finally, the invention relates to a computer system comprising means adapted to execute a program, where the program, when executed, causes the computer system to perform the method according to the invention thereby obtaining the above mentioned advantages and/or effects.

By computer system is meant e.g. a system comprising one or more processor means, like a specialised or general purpose CPU or the like, which may be programmed/instructed at one time or another in such a way that the computer executes the method according to the invention fully or in part.

The present invention will now be described more fully with reference to the drawings, in which
Figure 1 shows a schematic block diagram of a protocol stack in accordance with an embodiment according to the present invention;
Figure 2 illustrates a more detailed block diagram of a protocol stack in accordance with an embodiment of the present invention;
Figure 3 illustrates a schematic block diagram of a system for an embodiment according to the present invention;
Figure 4 shows a flowchart illustrating an embodiment of the method according to the present invention.

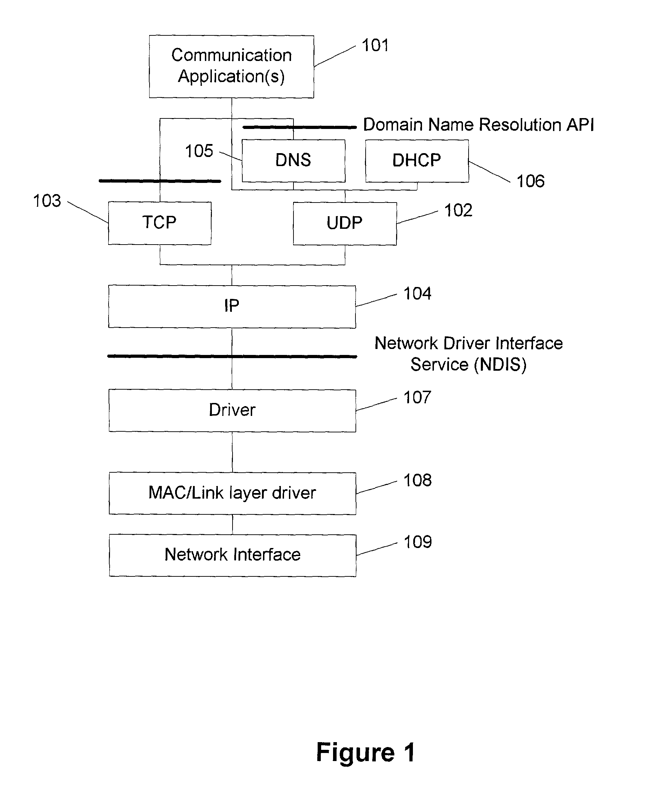

Figure 1 shows a schematic block diagram of a protocol stack in accordance with an embodiment according to the present invention. Shown is one or more communication applications (101) using the protocol stack for communication with other devices interconnected via an IP network. At least one of the communication applications is responsible for communicating, e.g. wirelessly, with a connecting mobile device for which a domain name and IP-address resolution are to be obtained. The one or more communications applications (101) are schematically located at the application layer of the protocol. The one or more communication applications chooses the kind of transport needed and passes the information/data to the transport layer, comprising the Transmission Control Protocol (TCP) (103), User Data Protocol (UDP) (102) and Internet Protocol (IP) (104), e.g. among others, of the TCP/IP protocol stack.

TCP (103) provides a reliable flow of data between two connected hosts. It is concerned with things such as partitioning the data passed to it from the application(s) into appropriately sized packets/frames for the network layer below, acknowledging received packets and setting time-outs to make certain the other end acknowledges packets that are sent. Hereby, a reliable flow of data is provided so that the application layer may ignore these details.

UDP (102), on the other hand, provides a much simpler service to the application(s), since it sends packets of data from one host to the other, but with no guarantee that the data will be delivered to the other end.

IP (104) is in general responsible for relaying packets of data from node to node, that is to move, specifically route, blocks of data over each of the networks that is located between the computers that want to communicate. IP (104) provides for the carriage of data from a source host to destination host(s), possible passing through one or more gateways (routers) and networks in the process. An IP protocol data unit is a sequence of bits containing a header part and a payload/data part, where the header information identifies the source, destination, length, handling advice, and characteristics of the payload contents.

Before a communication connection in an IP network can be established between a device and another device, computer, node, host, server, etc. on the network, a Domain Name Resolution API is addressed in order to establish IP-address assignment and domain name resolution for the connecting device. The Domain Name Resolution API comprises the Domain Name System (DNS) protocol (105) and the Dynamic Host Configuration Protocol (DHCP) (106).

DNS (105) is a protocol for obtaining what the IP address is for a specified name by querying a DNS server, i.e. relating the IP address with a host/domain name like www.ericcson.com, etc. to a unique IP address, and DHCP (106) is a protocol that enables individual computer on an IP network to extract their configurations from one or more servers (DHCP servers). Both DNS (105) and DHCP (106) are simple protocols and run 'on top' on UDP (102).

Also shown, is a special driver (107), which is implemented at the interface between the standard TCP/IP stack (102, 103, 104) and a underlying network Medium Access Controller (MAC)/Link Layer driver (108), which provides access to the relevant network via a Network Interface (109).

The link layer (108, 109) of the TCP/IC protocol stack, sometimes referred to as the network interface layer, normally includes the device driver in the operating system and the corresponding network interface card in the computer. Together, they handle all the hardware details of physically interfacing with the cable connection(s).

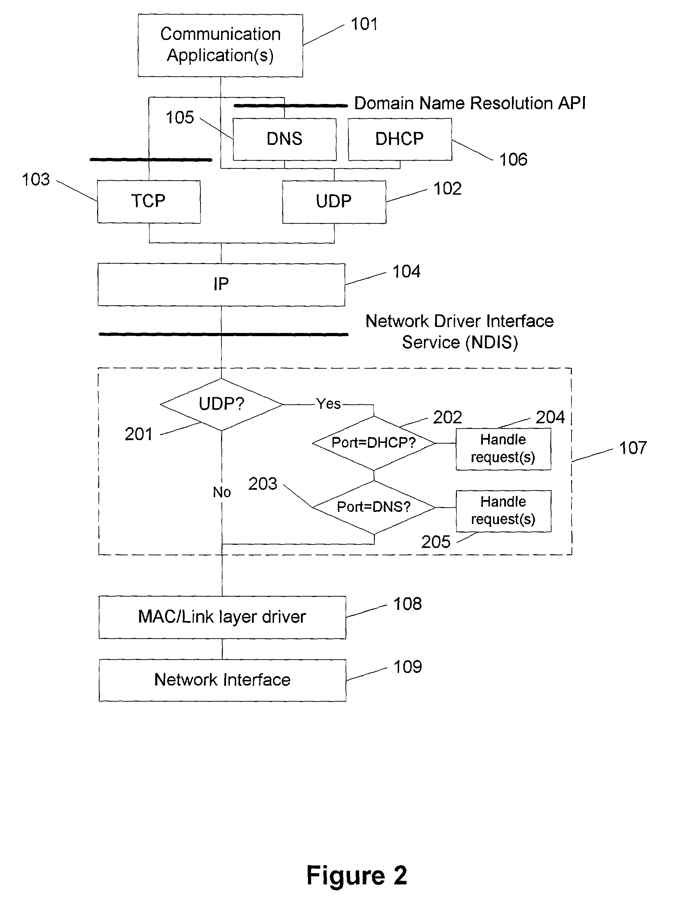

The function of the driver (107) is to look at the data packets coming from the TCP/IP stack (102, 103, 104) and filter out certain packets according to at least one condition/criteria and handle them locally with respect to domain name and IP-address resolution and send any result(s) back up the stack (102, 103, 104). This may be done quite simply and efficiently since for the cases envisioned here the driver (107) has to look only at a few fields of the packet headers in order to filter the relevant packets out. The driver (107) will be explained in greater detail in connection with Figure 2.

In this way an IP-address and domain name for an ad-hoc connecting device is obtained when the device connects to a network or a stationary device connected with a network like an IP network by handling any relevant queries/request(s) locally.

Figure 2 illustrates a more detailed block diagram of a protocol stack in accordance with an embodiment of the present invention. Figure 2 corresponds to Figure 1 and differs only in that further details regarding the function and structure of one embodiment of the driver (107) are shown.

When at least one data packet is received at the Network Driver Interface Service (NDIS) from the stack by the driver (107) a check (201) is made whether the packet is a UDP packet. This is preferably done by checking the fields of the received data packet headers for the type/content of the packet(s), i.e. it may be examined whether the condition/criteria 'Packet Type = UDP' is fulfilled.

For the packets fulfilling check (201) another check (202) is made for a field of the header in order to determine whether 'Destination Port Number = the assigned port for DHCP', i.e. packets being UDP packets and addressed for the communication port for DHCP are filtered out. If that is the case at least one corresponding DHCP request (204) is executed locally.

If check (202) fails/is false yet another check (203) is made where it is determined if 'Destination Port Number = the assigned port for DNS'. In the affirmative at least one corresponding DNS request (205) is executed locally.

Any result(s) of the requests (204, 205) are sent back up the stack to the appropriate communication application and then to the ad-hoc connecting device for use there.

The driver is transparent for the TCP/IP stack, since for packets having the packet type = TCP (103) (or UDP (102) where the packets is not addressed at either the port of DHCP or DNS) the packets are sent directly to the MAC/Link layer driver (108).

The method according to the invention is very useful in connection with e.g. a service discovery protocol of Bluetooth, since the mobile Bluetooth device obtains name and IP-address without needing complex hardware and/or software by using the functionality of the stationary device with respect to DNS and/or DHCP.

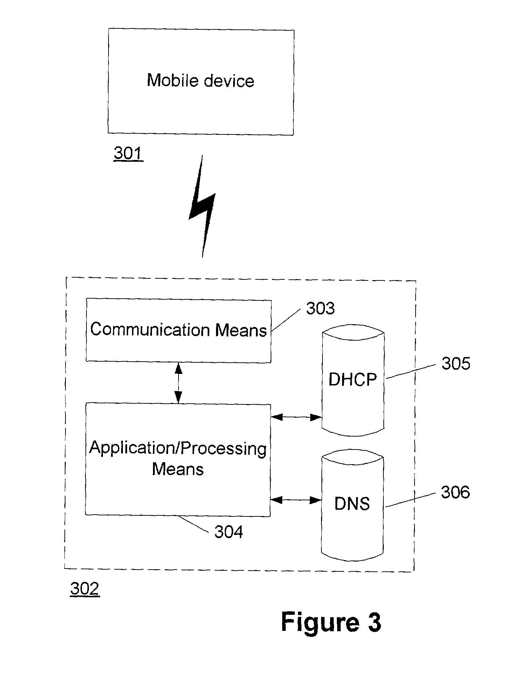

Figure 3 illustrates a schematic block diagram of a system for an embodiment according to the present invention. Shown are a mobile device (301) and a stationary unit (302) like a PC, local server, and etc.

The stationary unit (302) comprises the functionality of a, preferably standard, TCP/IP stack (not shown), like the stack described in connection with Figures 1 and 2, under the control or at least in connection with one or more communication applications in the application/processing means (304).

The mobile device (301) has communication means (not shown) for preferably wireless communication with the stationary unit (302) via communication means (303).

The wireless communication is controlled e.g. by a Bluetooth Link Manager (not shown), a radio MAC (not shown) or the like.

The communication application(s) may receive a request from the mobile device (301) regarding the assignment of an IP-address and Domain name resolution. In that case a normal request for the assignment are generated, which relates to at least a standard DNS and/or DHCP request. This request is 'intercepted' by a special driver, which functions like described in connection with Figures 1 and 2. That is data packets coming down the TCP/IP stack are filtered in order to identify any packets being UDP packets after which the selected/filtered data packets are examined for whether they address either the assigned port for DHCP or the assigned port for DNS. If the data packets addresses one of theses assigned ports a related request, i.e. a DHCP request (305) or a DNS request (306), are executed locally. The result (an IP-address and Domain name) of theses requests (305, 306) are sent back up the TCP/IP stack to the communication applications where it may be transmitted to the mobile device (301) for the respective use thereof.

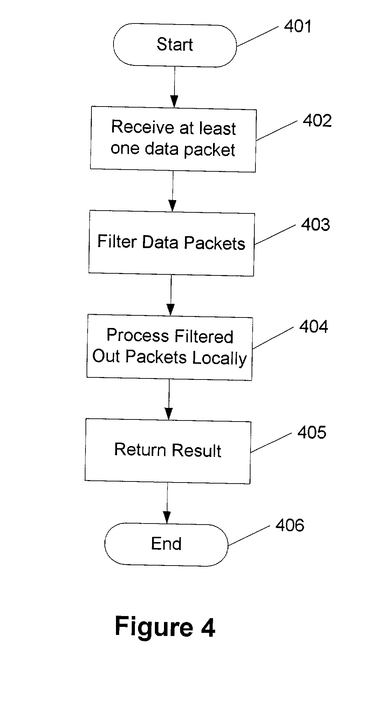

Figure 4 shows a flowchart illustrating an embodiment of the method according to the present invention. The method starts and initialises at step (401). At step (402) one or more data packets are received from a TCP/IP stack e.g. like the one shown in Figures 1 and 2. The data packets each comprise a data part and a header part.

At step (403) the received data packets that fulfil at least one predetermined condition/criteria are filtered out. Preferably, the filtering is done by examining a few fields of the received data packet headers. For example, it may be examined whether 'Packet Type = UDP' and 'Destination Port Number = the assigned port for DHCP', i.e. packets being UDP packets and/or addressed for the communication port for DHCP are filtered out.

Preferably, data packets being UDP packets and being addressed for the communication port for DNS are also filtered out.

The fact that the protocols used for IP-address assignment and domain name resolution, i.e. DHCP and DNS) are simple protocols and runs on top of UDP is preferably used in order to identify/filter packets relevant for IP-address assignment and domain name in a very simple and efficient way, since only a check of the field 'Packet Type' of the headers needs to be checked.

At step (404) the filtered data packets (fulfilling the at least one condition) are processed and/or handled locally in order to obtain a working IP-address and domain name for the connecting, e.g. wireless, device.

This is done by handling a request for each protocol (DHCP and DNS) with their respective assigned port number.

In this way, a working IP-address and domain name may be obtained e.g. by being assigned from a pool of currently available possibilities.

At step (405) the result(s) of the query, i.e. the local IP-address and domain name for the connecting device, are sent back up the TCP/IP stack to the communication(s) application, which may then transmit, e.g. wireless, this information to the connecting device.

At step (406) the method ends or at least returns to a previous state under the control of the communication application(s).

## Claims

1. Method of obtaining domain name and IP-address resolution for a device connecting with a network in an ad-hoc fashion, the method comprising the step of
• receiving at least one data packet, comprising a data part and a header part, from at least one communication application via a TCP/IP stack implemented in a stationary device,
**characterized in that** the method further comprises the steps of
• filtering the received packets according to at least one predetermined condition,
• processing the filtered out packets in order to generate and handle at least one request relating to domain name and/or IP-address resolution locally thereby deriving at least one result, and
• sending the at least one result of the at least one request back up the stack.

2. Method according to claim 1, **characterized in that** the step of filtering is done by examining a field of the header part of the received packets.

3. Method according to claims 1 - 2, **characterized in that** the step of filtering is done by checking at least a field of the header part of the received packets for one or more of the following conditions:
• Packet type = User Data Protocol (UDP),
• Destination port number = the assigned port for Dynamic Host Configuration Protocol (DHCP),
• Destination port number = the assigned port for Dynamic Name System (DNS), or
• any other suitable condition.

4. Method according to claims 1 - 3, **characterized in that** the at least one result comprises a local IP address and/or a local domain name for use by the connecting device.

5. Method according to claims 1 - 4, **characterized in that** the steps of the method are executed by a driver implemented at the interface between a standard TCP/IP stack and an underlying network Medium Access Controller (MAC) or Link Layer Driver.

6. Method according to claims 1 - 5, **characterized in that** the device is a mobile wireless communications device and that the mobile device and the stationary device communicates according to a wireless protocol.

7. Method according to claim 6, **characterized in that** the mobile wireless communications device uses a discovery method implemented by any one of a radio MAC, a Bluetooth Service Discovery Protocol (SDP), a base-band layer, a Bluetooth Link Manager and any other suitable protocol.

8. A computer-readable medium having stored thereon instructions for causing a processing unit to execute the method according to any one of claims 1 - 7.

9. A computer system comprising means adapted to execute a program, where the program, when executed, causes the computer system to perform the method according to claims 1 - 7.
